# EUROPEAN PATENT SPECIFICATION

(11) **EP 2 752 453 B1**
(45) Date of publication and mention of the grant of the patent: **07.12.2016**
(21) Application number: 11871807.1
(22) Date of filing: 30.08.2011
(51) Int. Cl.: C08L 45/00, C08L 53/02, C08L 23/22, C08L 25/10

(54) **CYCLOOLEFIN COPOLYMER RESIN COMPOSITION**
CYCLOOLEFINCOPOLYMER-HARZZUSAMMENSETZUNG
COMPOSITION DE RÉSINE DE COPOLYMÈRE DE CYCLOOLÉFINE

(43) Date of publication of application: 09.07.2014
(73) Proprietor: Kaneka Corporation, Osaka-shi, Osaka 530-8288 (JP)
(72) Inventor: NAKABAYASHI, Hironari, Settsu-shi Osaka 566-0072 (JP); IKARI, Yoshihiro, Settsu-shi Osaka 566-0072 (JP)
(74) Representative: Vossius & Partner Patentanwälte Rechtsanwälte mbB
(86) International application number: PCT/JP2011/069566
(87) International publication number: WO 2013/030944

(56) References cited:
- EP-A1- 0 995 776
- WO-A1-2011/094094
- JP-A- H1 121 413
- JP-A- H09 124 854
- JP-A- 2000 273 265
- JP-A- 2007 002 155
- JP-A- 2008 239 641

## Description

### TECHNICAL FIELD

The present invention relates to a cycloolefin copolymer composition which is excellent in the balance between transparency, low stress whitening, and impact resistance.

### BACKGROUND ART

Conventional cycloolefin copolymers have excellent moldability, dimensional stability, transparency, and moisture proofness, but have insufficient impact strength. Thus, studies are being conducted to improve the impact resistance. In other words, there is a demand for cycloolefin copolymers having improved impact resistance while keeping their excellent transparency. A generally known technique to improve the impact resistance of a transparent and brittle thermoplastic resin is to alloy the resin with an incompatible rubber component. Such a technique is also effective for cycloolefin copolymers. For example, Patent Literatures 1 and 2 disclose methods of alloying a cycloolefin copolymer with a commercially available block copolymer (SBS, SEBS, or SIS) as the rubber component to improve the impact resistance and toughness of the cycloolefin copolymer. Patent Literature 3 also discloses a method of alloying a cycloolefin copolymer with a block copolymer including an aromatic vinyl compound polymer block and an isobutylene polymer block as the rubber component to improve the impact resistance of the cycloolefin copolymer. Patent Literature 4 also discloses a method of combining a cycloolefin copolymer with a block copolymer including an aromatic vinyl compound polymer block and an isobutylene polymer block, an aromatic vinyl-conjugated diene copolymer, and a core-shell polymer as the rubber component to improve the impact resistance of the cycloolefin copolymer. However, the balance between transparency, impact resistance, and stress whitening is still insufficient in the above methods.

### CITATION LIST

### PATENT LITERATURE

Patent Literature 1: JP-A H01-256548
Patent Literature 2: JP-A 2004-156048
Patent Literature 3: JP-A H09-124854
Patent Literature 4: JP-A H11-21413

### SUMMARY OF INVENTION

### TECHNICAL PROBLEM

The present invention aims to provide a cycloolefin copolymer resin composition which is excellent in the balance between transparency, impact resistance, and low stress whitening.

### SOLUTION TO PROBLEM

The present inventors have made intensive studies to achieve the above object, thereby completing the present invention.

Specifically, the present invention relates to a transparent cycloolefin copolymer resin composition, comprising: 100 parts by weight of a cycloolefin copolymer (A) ; and 1 to 50 parts by weight of an isobutylene block copolymer (B) comprising a polymer block (a) based on an aromatic vinyl compound and a polymer block (b) based on isobutylene, the isobutylene block copolymer (B) comprising a block copolymer (B1) having a number average molecular weight of 20,000 to 70,000 and a block copolymer (B2) having a number average molecular weight of 80,000 to 300,000, and the weight ratio of (B1) to (B2) ranging from 5/95 to 95/5.

In a preferred embodiment, the present invention is directed to the transparent cycloolefin copolymer resin composition, wherein the difference in refractive index (nD) at 23°C between the cycloolefin copolymer (A) and the isobutylene block copolymer (B) is 0.03 or lower.

In a preferred embodiment, the present invention is directed to the transparent cycloolefin copolymer resin composition, wherein the cycloolefin copolymer (A) comprises 1 to 99% by weight of at least one cyclic olefin-derived structural unit, and 99 to 1% by weight of an acyclic olefin-derived structural unit.

In a preferred embodiment, the present invention is directed to the transparent cycloolefin copolymer resin composition, wherein the cycloolefin copolymer (A) comprises 50 to 90% by weight of at least one cyclic olefin-derived structural unit, and 50 to 10% by weight of an acyclic olefin-derived structural unit.

In a preferred embodiment, the present invention is directed to the transparent cycloolefin copolymer resin composition, wherein the isobutylene block copolymer (B) comprises at least 15% by weight but not more than 50% by weight of the polymer block (a) based on an aromatic vinyl compound.

In a preferred embodiment, the present invention is directed to the transparent cycloolefin copolymer resin composition, wherein a 2-mm-thick sheet-shaped cured product of the resin composition has a Charpy impact strength of 5 N/m² or higher, a haze value of 20 or lower, and a tensile elongation at break of 10% or higher.

### ADVANTAGEOUS EFFECTS OF INVENTION

The present invention enables to provide a cycloolefin copolymer composition which is excellent in the balance between transparency, low stress whitening, and impact resistance.

### DESCRIPTION OF EMBODIMENTS

The transparent cycloolefin copolymer resin composition of the present invention includes 100 parts by weight of a cycloolefin copolymer (A); and 1 to 50 parts by weight of an isobutylene block copolymer (B) including a polymer block (a) based on an aromatic vinyl compound and a polymer block (b) based on isobutylene, the isobutylene block copolymer (B) including a block copolymer (B1) having a number average molecular weight of 20,000 to 70,000 and a block copolymer (B2) having a number average molecular weight of 80,000 to 300,000, and the weight ratio of (B1) to (B2) ranging from 5/95 to 95/5.

The cycloolefin copolymer (A) (hereinafter sometimes referred to as "COC") used in the present invention refers to an amorphous polymer having a cyclic olefin structure, and preferably has a glass transition temperature of 50°C to 250°C, more preferably 80°C to 200°C, and particularly preferably 80°C to 160°C. If the glass transition temperature is lower than 50°C, rigidity is low and thus the balance between rigidity and impact resistance is poor, whereas if the glass transition temperature is higher than 250°C, good processability is less likely to be achieved. Thus, these glass transition temperature ranges are not preferred. The COC used in the present invention preferably includes, based on the total COC amount, 1 to 99% by weight of at least one cyclic olefin, preferably represented by the formula (I), (II), (III), (IV), (V), (VI) or (VII) below (wherein R¹ to R⁸ may be the same as or different from each other and each represent a hydrogen atom or a C1 to C20 hydrocarbon group, and at least two of R¹ to R⁸, which are C1 to C20 hydrocarbon groups, may together form a ring; and n in the formula (VII) represents an integer of 2 to 10), and 99 to 1% by weight of at least one acyclic olefin, preferably represented by the formula (VIII) below (wherein R⁹ to R¹² are the same as or different from each other and each represent a C1 to C20 hydrocarbon group). More preferably, the COC includes, based on the total COC amount, 50 to 90% by weight of at least one cyclic olefin and 50 to 10% by weight of at least one acyclic olefin. If the cyclic olefin content is less than 50% by weight, heat resistance tends to be deteriorated. If the cyclic olefin content is more than 90% by weight, processability and impact resistance tend to be deteriorated.

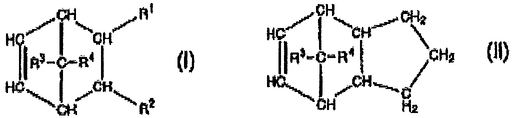

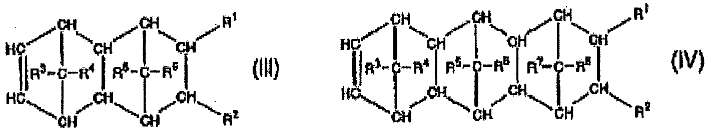

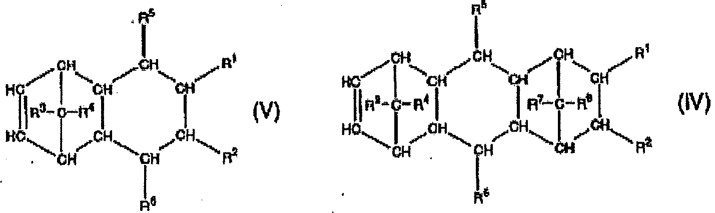

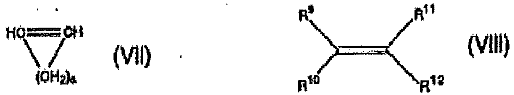

The COC is preferably formed from a cyclic olefin having a norbornene-based structure, particularly preferably norbornene, tetracyclododecene, or cyclic olefins having a structure derived from any of them, and an acyclic olefin containing a terminal double bond, such as an α-olefin, particularly preferably ethylene or propylene. Particularly preferred among these are norbornene/ethylene, norbornene/propylene, tetracyclododecene/ethylene, and tetracyclododecene/propylene copolymers. The COC suitable for the object of the present invention preferably has a viscosity number of 25 to 200 ml/g, more preferably 40 to 80 ml/g (determined in decalin at 135°C). COCs having a viscosity number of less than 25 ml/g are not preferred because the resulting molded products tend to have insufficient rigidity, whereas COCs having a viscosity number of more than 200 ml/g are not preferred because the molding processability tends to be deteriorated. The COC used in the present invention may be a commercial product such as "Topas" produced by Polyplastics Co., Ltd. and "APEL" produced by Mitsui Chemicals, Inc.

The isobutylene block copolymer (B) in the present invention refers to a block copolymer including a polymer block (a) based on an aromatic vinyl compound and a polymer block (b) based on isobutylene.

The polymer block (a) based on an aromatic vinyl compound refers to a polymer block including 60% by weight or more, preferably 80% by weight or more of an aromatic vinyl compound-derived unit.

Examples of the aromatic vinyl compounds include styrene, o-, m- or p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-, m- or p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-, m- or p-t-butylstyrene, o-, m- or p-methoxystyrene, o-, m- or p-chloromethylstyrene, o-, m- or p-bromomethylstyrene, silyl-substituted styrene derivatives, indene and vinyl naphthalene. Preferred among these are styrene, α-methylstyrene, and mixtures of these, particularly preferably styrene, in terms of industrial availability and glass transition temperature.

The polymer block (b) based on isobutylene refers to a polymer block including 60% by weight or more, preferably 80% by weight or more of an isobutylene-derived unit.

Each of the polymer blocks may contain as a copolymerization component the monomer of the other polymer block, and may also contain other cation-polymerizable monomer components. Examples of such monomer components include aliphatic olefins, dienes, vinyl ethers, silanes, vinylcarbazole, β-pinene, acenaphthylene, and other monomers. These may be used alone or in combinations of two or more.

Examples of the aliphatic olefin monomers include ethylene, propylene, 1-butene, 2-methyl-1-butene, 3-methyl-1-butene, pentene, hexene, cyclohexene, 4-methyl-1-pentene, vinylcyclohexane, octene and norbornene.

Examples of the diene monomers include butadiene, isoprene, hexadiene, cyclopentadiene, cyclohexadiene, dicyclopentadiene, divinylbenzene and ethylidenenorbornene.

Examples of the vinyl ether monomers include methyl vinyl ether, ethyl vinyl ether, (n- or iso)propyl vinyl ether, (n-, sec-, tert- or iso)butyl vinyl ether, methyl propenyl ether and ethyl propenyl ether.

Examples of the silane compounds include vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, γ-methacryloyloxypropyltrimethoxysilane and γ-methacryloyloxypropylmethyldimethoxysilane.

The isobutylene block copolymer (B) in the present invention has a structure including a block copolymer (B1) having a number average molecular weight of 20,000 to 70,000 and a block copolymer (B2) having a number average molecular weight of 80,000 to 300,000, as measured by GPC. The isobutylene block copolymer (B) more preferably includes a block copolymer (B1) having a number average molecular weight of 40,000 to 70, 000 and a block copolymer (B2) having a number average molecular weight of 80,000 to 150,000, as measured by GPC.

Further, the weight ratio of (B1) to (B2) ranges from 5/95 to 95/5. The weight ratio of (B1) to (B2) more preferably ranges from 15/85 to 95/5. If the weight ratio of (B1) to (B2) is less than 5/95, then stress whitening may become remarkable, whereas if the weight ratio of (B1) to (B2) is more than 95/5, then impact strength may be lowered.

The ratios of weight average molecular weight to number average molecular weight of (B1) and (B2) are both preferably 1.5 or lower in terms of stable processability.

The structure of the isobutylene block copolymer (B) in the present invention is not particularly limited as long as it includes an aromatic vinyl-based block and an isobutylene-based block. For example, it may be selected from any of the following: a block, diblock, triblock, or multiblock copolymer , which have a linear, branched or star structure. A preferred structure in terms of physical property balance and molding processability is an aromatic vinyl polymer block/isobutylene polymer block/aromatic vinyl polymer block triblock copolymer. These copolymers may be used alone or in combinations of two or more in order to obtain desired physical properties or molding processability.

The proportions of the aromatic vinyl polymer block (a) and the isobutylene polymer block (b) are not particularly limited. The amount of the aromatic vinyl polymer block (a) in the component (B) is preferably at least 15% by weight but not more than 50% by weight, and more preferably at least 20% by weight but not more than 45% by weight, in terms of flexibility, refractive index, and rubber elasticity.

The method for producing the isobutylene block copolymer (B) is not particularly limited. For example, the isobutylene block copolymer (B) is obtainable by polymerizing monomer components in the presence of a compound represented by the following formula (IX):

(CR¹³R¹⁴X) nR¹⁵ (IX)

wherein X represents a substituent selected from halogen atoms and C1 to C6 alkoxy or acyloxy groups; R¹³ and R¹⁴ each represent a hydrogen atom or a C1 to C6 monovalent hydrocarbon group, and may be the same as or different from each other; R¹⁵ represents a monovalent or polyvalent aromatic hydrocarbon group or a monovalent or polyvalent aliphatic hydrocarbon group; and n represents a natural number of 1 to 6.

The compound represented by the formula (IX) functions as an initiator, and when in the presence of, for example, a Lewis acid, it is considered to form a carbocation to serve as an initiation site for cationic polymerization. Examples of the compounds represented by the formula (IX) in the present invention include the following compounds:

(1-chloro-1-methylethyl)benzene [C₆H₅C(CH₃)₂Cl], 1,4-bis(1-chloro-1-methylethyl)benzene. [1,4-Cl(CH₃)₂CC₆H₄C(CH₃)₂Cl], 1,3-bis(1-chloro-1-methylethyl)benzene [1,3-Cl(CH₃)₂CC₆H₄C(CH₃)₂Cl], 1,3,5-tris(1-chloro-1-methylethyl)benzene [1,3,5-(C1C(CH₃)₂)₃C₆H₃], and 1,3-bis(1-chloro-1-methylethyl)-5-(tert-butyl)benzene [1,3-(C(CH₃)₂Cl)₂-5-(C(CH₃)₃)C₆H₃]. Particularly preferred among these are bis(1-chloro-1-methylethyl)benzene [C6H₄(C(CH₃)2Cl)₂] and tris (1-chloro-1-methylethyl) benzene [(ClC(CH₃)₂)₃C₆H₃]. The bis(1-chloro-1-methylethyl)benzene is also called bis(α-chloroisopropyl)benzene, bis(2-chloro-2-propyl)benzene or dicumyl chloride, and the tris(1-chloro-1-methylethyl).benzene is also called tris(α-chloroisopropyl)benzene, tris(2-chloro-2-propyl)benzene or tricumyl chloride.

In the production of the isobutylene block copolymer (B), a Lewis acid catalyst may further coexist. The Lewis acid may be any Lewis acid as long as it can be used in cationic polymerization, and metal halides such as TiCl₄, TiBr₄, BCl₃, BF₃, BF₃ · OEt₂, SnCl₄, SbCl₅, SbF₅, WCl₆ TaCl₅, VCl₅ FeCl₃, ZnBr₂, AlCl₃ and AlBr₃; and organometal halides such as Et₂AlCl and EtAlCl₂ can be suitably used. Preferred among them are TiCl₄, BCl₃, and SnCl₄, in view of their catalytic abilities and the ease of their industrial availability. The amount of the Lewis acid used is not particularly limited, and may be selected according to the polymerization characteristics or polymerization concentrations of the monomers employed.

The Lewis acid may typically be used in an amount of 0.1 to 100 mole equivalents, preferably 1 to 50 mole equivalents, relative to the compound represented by the formula (IX).

In the production of the isobutylene block copolymer (B), an electron donor component may optionally further coexist. This electron donor component is considered to be effective in stabilizing growing carbocations during cationic polymerization, and, when such an electron donor is added, a structurally controlled polymer with a narrow molecular weight distribution can be formed. Examples of electron donor components that can be used include, but are not limited to, pyridines, amines, amides, sulfoxides, esters, and metal compounds containing oxygen atom(s) bonded to metal atom(s).

The polymerization for the isobutylene block copolymer (B) may optionally be carried out in an organic solvent. The organic solvent is not particularly limited as long as it does not essentially inhibit the cationic polymerization. Specific examples of the organic solvent include halogenated hydrocarbons such as methyl chloride, dichloromethane, chloroform, ethyl chloride, dichloroethane, n-propyl chloride, n-butyl chloride, and chlorobenzene; alkylbenzenes such as benzene, toluene, xylene, ethylbenzene, propylbenzene, and butylbenzene; linear aliphatic hydrocarbons such as ethane, propane, butane, pentane, hexane, heptane, octane, nonane, and decane; branched aliphatic hydrocarbons such as 2-methylpropane, 2-methylbutane, 2,3,3-trimethylpentane, and 2,2,5-trimethylhexane; cyclic aliphatic hydrocarbons such as cyclohexane, methylcyclohexane, and ethylcyclohexane; and paraffin oils obtained by hydrogenation refining of petroleum fractions.

Considering the balance among the polymerization characteristics of the monomers forming the isobutylene block copolymer (B), and the solubility and other properties of the resulting polymer, these solvents may be used alone or in combinations of two or more.

In view of the viscosity of the resulting polymer solution and the ease in removing heat from the solution, the amount of the solvent to be used is determined so that the polymer concentration is 1 to 50% by weight, preferably 5 to 35% by weight.

In actually carrying out the polymerization, the components are mixed with cooling, for example, at a temperature of at least -100°C but lower than 0°C. A particularly preferred temperature range for balancing the energy cost with polymerization stability is -30°C to -80°C.

The amount of the isobutylene block copolymer (B) per 100 parts by weight of the cycloolefin copolymer (A) is 1 to 50 parts by weight, preferably 3 to 40 parts by weight, and more preferably 10 to 30 parts by weight. If the amount is less than 1 part by weight, then impact resistance may be insufficient. If the amount is more than 50 parts by weight, the balance between rigidity and impact resistance may be deteriorated.

The difference in refractive index (nD) at 23°C between the cycloolefin copolymer (A) and the isobutylene block copolymer (B) is preferably 0.03 or lower in terms of transparency.

A 2-mm-thick sheet-shaped cured product, which is obtained by curing the cycloolefin copolymer resin composition, preferably has a Charpy notched impact strength of 5 N/m² or higher, a haze value of 20 or lower, and a tensile elongation at break of 10% or higher. The products having a Charpy notched impact strength lower than 5 N/m² are not preferred in terms of impact resistance required for use in containers and packaging materials. The products having a haze value higher than 20 are not preferred for use in containers requiring transparency. The products having a tensile elongation at break lower than 10% are not preferred in terms of deformability required for use in containers and packaging materials.

The cycloolefin copolymer resin composition may be used alone, or may be used as a masterbatch, for example, in the form of a blend with other cycloolefin copolymers. The cycloolefin copolymer resin composition of the present invention may be molded and processed by a well-known method. For example, a single-screw extruder, twin-screw extruder, twin-screw conical extruder, Brabender mixer, injection molding machine or the like may be used. For example, the cycloolefin copolymer resin composition may be processed into a molded product, plate or film by press molding, extrusion molding, injection molding, blow molding or inflation molding.

The cycloolefin copolymer resin composition of the present invention may contain one or two or more additives, such as a plasticizer, an ultraviolet stabilizer, a heat stabilizer, an antioxidant, and an antistatic agent, in conventional amounts.

The cycloolefin copolymer resin composition of the present invention is particularly suitable for, for example, bottles, cups, medical applications (such as blister packs and drug packaging films), extrusion films (for packing, for example), and food packaging films.

### EXAMPLES

The following illustrates examples of the present invention. However, they are merely for purposes of illustration and by no means limit the scope of the present invention. In the description which follows, "%" and "part (s) " mean "% by weight" and "part (s) by weight, " respectively, unless otherwise specified.

### <Preparation and testing of composition>

Predetermined amounts of materials were dry blended. Then the mixture was melt-mixed by a twin-screw extruder (TEX-30HSS produced by The Japan Steel Works, Ltd.) and pelletized. Subsequently, the pellets were injection molded (using IS80EPN produced by TOSHIBA MACHINE CO., LTD. with a predetermined mold), thereby preparing a specimen. The molding was performed at a nozzle temperature of 250°C and an injection pressure of 1000/800 (kg/cm²) (= primary/secondary pressure).

The physical properties of the composition were measured and evaluated by the following methods.

### (1) Charpy impact strength

The Charpy impact strength was evaluated in conformity with JIS-K7111-1. The specimen prepared by injection molding had a thickness of 1/4 inches and was notched. The test was conducted at room temperature.

### (2) Transparency (total light transmittance and haze)

A 3-mm-thick flat plate prepared by injection molding was used (press molding was performed at 200°C). The total light transmittance (Tt%) and the haze were measured at 23°C using NDH-Σ80 produced by NIPPON DENSHOKU INDUSTRIES CO., LTD according to JIS-7105.

### (3) Refractive index

The refractive index of a sample sheet was measured at 23°C using an Abbe's refractometer 3T (D line, 589 mm) produced by Atago Co., Ltd.

### (4) Tensile elongation at break

A JIS 1A dumbbell specimen prepared by injection molding was used. The tensile elongation at break was evaluated at a strain rate of 10 mm/min in accordance with JIS K 7162.

### (5) Stress whitening

A JIS 1A dumbbell specimen prepared by injection molding was used. Stress whitening was evaluated at a strain rate of 10 mm/min. The specimen was observed for whitening between gauge lines at strains of 2%, 3%, and 4%. Dumbbell specimens with no whitening were rated as "Good", slightly turbid dumbbell specimens were rated as "Acceptable", and strongly whitened dumbbell specimens through which nothing could be seen were rated as "Poor".

### <Materials used in examples and comparative examples>

Topas 6013 (registered trademark, a product of Polyplastics Co., LTD.) was used as the COC (component (A)). According to the measurement by Polyplastics Co., LTD., the glass transition temperature (Tg) of this COC is 135°C. The actually measured refractive index (nD) at 23°C of a 2 mm-thick plate of the COC was 1.535 (The value in the catalog is 1.535) . (78.7% by weight of cyclic olefin and 21. 3% by weight of acyclic olefin).

### Component (B2)

B2: styrene-isobutylene-styrene triblock copolymer (styrene content: 30% by weight, refractive index (nD) at 23°C: 1.532, Mn: 93000) (Production Example 1)

### Component (B1)

B1: styrene-isobutylene diblock copolymer (styrene content: 30% by weight, refractive index (nD) at 23°C: 1.532, Mn: 52000) (Production Example 2)

### (Production Example 1) Method for production of B2

After the atmosphere in a 2-L separable flask (polymerization vessel) was replaced with nitrogen, the polymerization vessel was charged with 456.4 mL of n-hexane and 656.3 mL of butyl chloride (both dried over molecular sieves) through a syringe, and then cooled by immersion in a dry ice/methanol bath at -70°C. A liquid feeding tube made of Teflon (registered trademark) was connected to a pressure-resistant glass liquefaction collection tube equipped with a three-way cock, containing 232 mL (2871 mmol) of isobutylene monomer, and the isobutylene monomer was fed to the polymerization vessel under nitrogen pressure. Then, 0.687 g (3.0 mmol) of p-dicumyl chloride and 1.30 g (14 mmol) of α-picoline were added, and subsequently 8. 67 mL (79.1 mmol) of titanium tetrachloride was further added to initiate the polymerization. After stirring at the same temperature for 2. 5 hours from the start of polymerization, about 1 mL of the polymerization solution was sampled. Then, a mixed solution of 77.9 g (748 mmol) of styrene monomer, 14.1 mL of n-hexane and 20.4 mL of butyl chloride, which was previously cooled to -70°C, was added to the polymerization vessel. After the lapse of 2 hours, a large amount of water was added to terminate the reaction.

The reaction solution was washed with water two times, the solvent was evaporated, and the residual polymer was dried under vacuum at 60°C for 24 hours to give a target block copolymer. The molecular weight of the obtained polymer was measured by gel permeation chromatography (GPC). The polystyrene equivalent molecular weight was determined using chloroform as the mobile phase. A GPC system (produced by Waters) was used, and a Shodex K-804 (polystyrene gel) column (produced by Showa Denko K.K.) was used. The obtained block copolymer had a Mn of 93000.

### (Production Example 2) Method for production of B1

After the atmosphere in a 2-L separable flask (polymerization vessel) was replaced with nitrogen, the polymerization vessel was charged with 519 mL of n-hexane and 4740 mL of butyl chloride (both dried over molecular sieves) through a syringe, and then cooled by immersion in a dry ice/methanol bath at -70°C. A liquid feeding tube made of Teflon (registered trademark) was connected to a pressure-resistant glass liquefaction collection tube equipped with a three-way cock, containing 1630 mL (20.1 mol) of isobutylene monomer, and the isobutylene monomer was fed to the polymerization vessel under nitrogen pressure. Then, 6.76 g (29.2 mmol) of cumyl chloride and 1.64 g (17.6 mmol) of α-picoline were added, and subsequently 17 mL (156 mmol) of titanium tetrachloride was further added to initiate the polymerization. After stirring at the same temperature for 2.5 hours from the start of polymerization, about 1 mL of the polymerization solution was sampled. Then, 482.6 g (4.62 mol) of styrene monomer, which was previously cooled to -70°C, was added to the polymerization vessel. After the lapse of 2 hours, a large amount of water was added to terminate the reaction.

The reaction solution was washed with water two times, the solvent was evaporated, and the residual polymer was dried under vacuum at 60°C for 24 hours to give a target block copolymer. The molecular weight of the obtained polymer was measured by gel permeation chromatography (GPC). The obtained block copolymer had a Mn of 52000.

### (Examples 1 to 5)

The components (A) and (B) were dry blended according to each of the formulation ratios shown in Table 1. Then, the mixture was melt-mixed in a twin-screw extruder and pelletized, thereby providing a resin composition. The resin composition was formed into a sheet by an injection molding machine, and the properties of the sheet were measured. Table 1 shows the formulations and the results of the measurement of the properties.

### (Comparative Examples 1 to 5)

The components (A) and (B) were dry blended according to each of the formulation ratios shown in Table 1. Then, the mixture was melt-mixed in a twin-screw extruder and pelletized, thereby providing a resin composition. The resin composition was formed into a sheet by an injection molding machine, and the properties of the sheet were measured. Table 2 shows the formulations and the results of the measurement of the properties.

**[Table 1]**

| | | Example 1 | Example 2 | Example 3 | Example 4 | Example 5 |
|---|---|---|---|---|---|---|
| Component (A) | Topas 6013 (parts by weight) | 100 | 100 | 100 | 100 | 100 |
| Component (B) | B2 (parts by weight) | 22.5 | 10 | 5 | 12 | 9 |
| | B1 (parts by weight) | 2.5 | 10 | 20 | 3 | 6 |
| | B1/B2 | 10/90 | 50/50 | 80/20 | 25/75 | 40/60 |
| Charpy impact strength | (kJ/m²) | 9.8 | 9.2 | 8.8 | 8.5 | 8.1 |
| Transparency | Haze (%) | 5 | 5 | 5 | 5 | 5 |
| | Tt (%) | 91 | 90 | 90 | 90 | 90 |
| Tensile elongation at break | (%) | 15 | 18 | 13 | 17 | 15 |
| Stress whitening | 2 % Strain | Good | Good | Good | Good | Good |
| | 3 % Strain | Good | Good | Good | Good | Good |
| | 4 % Strain | Good | Good | Good | Good | Good |

**[Table 2]**

| | | Comparative Example 1 | Comparative Example 2 | Comparative Example 3 | Comparative Example 4 | Comparative Example 5 |
|---|---|---|---|---|---|---|
| Component (A) | Topas 6013 (parts by weight) | 100 | 100 | 100 | 100 | 100 |
| Component (B) | B2 (parts by weight) | 25 | 15 | 0 | 24.5 | 0 |
| | B1 (parts by weight) | 0 | 0 | 15 | 0.5 | 0 |
| | B1/B2 | 0/100 | 0/100 | 100/0 | 2/98 | - |
| Charpy impact strength | (kJ/m²) | 9.1 | 7.4 | 4.0 | 8.2 | 3.5 |
| Transparency | Haze (%) | 5 | 5 | 5 | 5 | 2 |
| | Tt (%) | 90 | 91 | 90 | 91 | 92 |
| Tensile elongation at break | (%) | 18 | 18 | 12 | 17 | 3 |
| Stress whitening | 2 % Strain | Poor | Acceptable | Good | Acceptable | Good |
| | 3 % Strain | Poor | Acceptable | Good | Poor | Good |
| | 4 % Strain | Poor | Poor | Good | Poor | Broken |

The resin compositions in Examples 1 to 5 had an excellent balance between stress whitening and impact strength as compared to the resin compositions in Comparative Examples 1 to 4 in which the weight ratio of B1/B2 was outside the range of 5/95 to 95/5. Moreover, the resin compositions in Examples 1 to 5 had higher impact strength and tensile elongation at break than the resin composition in Comparative Example 5 in which the component (B) was not contained. These results demonstrate that the resin compositions of the examples of the present invention have an excellent balance between impact strength, tensile elongation at break, and low stress whitening.

### INDUSTRIAL APPLICABILITY

The cycloolefin copolymer composition of the present invention has excellent transparency and excellent impact resistance, and is suitable for, for example, bottles, cups, medical applications (such as blister packs and drug packaging films), extrusion films (for packing, for example), and food packaging films, and other applications requiring transparency.

## Claims

1. A transparent cycloolefin copolymer resin composition, comprising:
100 parts by weight of a cycloolefin copolymer (A) ; and 1 to 50 parts by weight of an isobutylene block copolymer (B) comprising a polymer block (a) based on an aromatic vinyl compound and a polymer block (b) based on isobutylene,
the isobutylene block copolymer (B) comprising a block copolymer (B1) having a number average molecular weight of 20, 000 to 70, 000 as measured by GPC and a block copolymer (B2) having a number average molecular weight of 80,000 to 300,000 as measured by GPC, and
the weight ratio of (B1) to (B2) ranging from 5/95 to 95/5;
wherein a 2-mm-thick sheet-shaped molded product of the resin composition has a haze value of 20 or lower.

2. The transparent cycloolefin copolymer resin composition according to claim 1,
wherein the difference in refractive index (nD) at 23°C between the cycloolefin copolymer (A) and the isobutylene block copolymer (B) is 0.03 or lower.

3. The transparent cycloolefin copolymer resin composition according to claim 1 or 2,
wherein the cycloolefin copolymer (A) comprises 1 to 99% by weight of at least one cyclic olefin-derived structural unit, and 99 to 1% by weight of an acyclic olefin-derived structural unit.

4. The transparent cycloolefin copolymer resin composition according to claim 1 or 2,
wherein the cycloolefin copolymer (A) comprises 50 to 90% by weight of at least one cyclic olefin-derived structural unit, and 50 to 10% by weight of an acyclic olefin-derived structural unit.

5. The transparent cycloolefin copolymer resin composition according to any one of claims 1 to 4,
wherein the isobutylene block copolymer (B) comprises at least 15% by weight but not more than 50% by weight of the polymer block (a) based on an aromatic vinyl compound.

6. The transparent cycloolefin copolymer resin composition according to any one of claims 1 to 5,
wherein a 2-mm-thick sheet-shaped molded product of the resin composition has a Charpy notched impact strength of 5 kJ/m² or higher, and a tensile elongation at break of 10% or higher.

## Patentansprüche

1. Eine transparente Cycloolefincopolymer-Harzzusammensetzung, umfassend:
100 Gewichtsteile eines Cycloolefincopolymers (A); und
1 bis 50 Gewichtsteile eines Isobutylen-Blockcopolymers (B), umfassend einen Polymerblock (a) basierend auf einer aromatischen Vinylverbindung und einen Polymerblock (b) basierend auf Isobutylen,
wobei das Isobutylen-Blockcopolymer (B) ein Blockcopolymer (B1) mit einem Zahlenmittel des Molekulargewichts von 20,000 bis 70,000, gemessen mit GPC, und ein Blockcopolymer (B2) mit einem Zahlenmittel des Molekulargewichts von 80,000 bis 300,000, gemessen mit GPC, umfasst und
wobei das Gewichtsverhältnis von (B1) zu (B2) im Bereich von 5/95 bis 95/5 liegt; wobei ein 2 mm dicker bahnenförmiger Formkörper der Harzzusammensetzung einen Trübungswert von 20 oder weniger aufweist.

2. Die transparente Cycloolefincopolymer-Harzzusammensetzung gemäß Anspruch 1, wobei die Differenz im Brechungsindex (nD) bei 23°C zwischen dem Cycloolefincopolymer (A) und dem Isobutylen-Blockcopolymer (B) 0,03 oder weniger beträgt.

3. Die transparente Cycloolefincopolymer-Harzzusammensetzung gemäß Anspruch 1 oder 2,
wobei das Cycloolefincopolymer (A) 1 bis 99 Gew.-% mindestens einer von einem cyclischen Olefin abgeleiteten Struktureinheit und 99 bis 1 Gew.-% einer von einem acyclischen Olefin abgeleiteten Struktureinheit umfasst.

4. Die transparente Cycloolefincopolymer-Harzzusammensetzung gemäß Anspruch 1 oder 2,
wobei das Cycloolefincopolymer (A) 50 bis 90 Gew.-% mindestens einer cyclischen
Olefin abgeleiteten Struktureinheit und 50 bis 10 Gew.-% einer von einem acyclischen Olefin abgeleiteten Struktureinheit umfasst.

5. Die transparente Cycloolefincopolymer-Harzzusammensetzung gemäß einem der Ansprüche 1 bis 4,
wobei das Isobutylen-Blockcopolymer (B) mindestens 15 Gew.-% aber nicht mehr als 50 Gew.-% des Polymerblocks (a) basierend auf einer aromatischen Vinylverbindung umfasst.

6. Die transparente Cycloolefincopolymer-Harzzusammensetzung gemäß einem der Ansprüche 1 bis 5,
wobei ein 2 mm dicker bahnenförmiger Formkörper der Harzzusammensetzung eine Kerbschlagzähigkeit nach Charpy von 5 kJ/m² oder mehr und eine Zug-Bruchdehnung von 10% oder höher aufweist.

## Revendications

1. Composition de résine de copolymère de cyclooléfine transparente comprenant :
100 parties en poids d'un copolymère de cyclooléfine (A) ; et
de 1 à 50 parties en poids d'un copolymère séquencé d'isobutylène (B) comprenant une séquence polymère (a) basée sur un composé vinylique aromatique et une séquence polymère (b) basée sur l'isobutylène,
le copolymère séquencé d'isobutylène (B) comprenant un copolymère séquencé (B1) ayant un poids moléculaire moyen en nombre de 20 000 à 70 000 mesuré par GPC et un copolymère séquencé (B2) ayant un poids moléculaire moyen en nombre de 80 000 à 300 000 mesuré par GPC, et
le rapport pondéral de (B1) sur (B2) étant compris dans la plage allant de 5/95 à 95/5 ;
dans laquelle un produit moulé en forme de feuille de 2 mm d'épaisseur de la composition de résine a un indice de trouble inférieur ou égal à 20.

2. Composition de résine de copolymère de cyclooléfine transparente selon la revendication 1,
dans laquelle la différence d'indice de réfraction (nD) à 23 °C entre le copolymère de cyclooléfine (A) et le copolymère séquencé d'isobutylène (B) est inférieur ou égal à 0,03.

3. Composition de résine de copolymère de cyclooléfine transparente selon la revendication 1 ou 2,
dans laquelle le copolymère de cyclooléfine (A) comprend de 1 à 99 % en poids d'au moins un motif structurel dérivé d'une oléfine cyclique et de 99 à 1 % en poids d'un motif structurel dérivé d'une oléfine acyclique.

4. Composition de résine de copolymère de cyclooléfine transparente selon la revendication 1 ou 2,
dans laquelle le copolymère de cyclooléfine (A) comprend de 50 à 90 % en poids d'au moins un motif structurel dérivé d'une oléfine cyclique et de 50 à 10 % en poids d'un motif structurel dérivé d'une oléfine acyclique.

5. Composition de résine de copolymère de cyclooléfine transparente selon l'une quelconque des revendications 1 à 4,
dans laquelle le copolymère séquencé d'isobutylène (B) comprend au moins 15 % en poids mais pas plus de 50 % en poids de la séquence polymère (a) basée sur un composé vinylique aromatique.

6. Composition de résine de copolymère de cyclooléfine transparente selon l'une quelconque des revendications 1 à 5,
dans laquelle un produit moulé en forme de feuille de 2 mm d'épaisseur de la composition de résine a une résistance au choc Charpy sur barreau entaillé supérieure ou égale à 5 kJ/m² et un allongement en traction à la rupture supérieur ou égal à 10 % .
